# EUROPEAN PATENT APPLICATION

(11) **EP 4 748 723 A1**
(43) Date of publication of application: **27.05.2026**
(21) Application number: 25215116.2
(22) Date of filing: 12.11.2025
(51) Int. Cl.: B64G 1/22, E04C 3/04

(54) **SYSTEMS AND METHODS FOR PROVIDING A TRUSS STRUCTURE**

(30) Priority: 22.11.2024 US 202418956806
(71) Applicant: Eagle Technology, LLC, Melbourne, FL 32919 (US)
(72) Inventor: FREESTONE, Michael, Moss Beach, 94038 (US)
(74) Representative: Schmidt, Steffen J.

(57) **Abstract**

Systems and methods for providing a truss structure. The methods comprise: increasing a distance between a first end fitting coupled to a first node and a second end fitting coupled to a second node by actuating a flexure member to cause cup member of first end fitting to move in a first direction toward the first node; inserting a tube between the first and second end fittings; receiving a first end of the tube in an insert space of the second end fitting; decreasing the distance between the first end fitting and the second end fitting by actuating the flexure member to cause at least the cup member of the first end fitting to move in an opposing second direction away from the first node; and receiving a second end of the tube in an insert space of the first end fitting to provide a portion of the truss structure.

## Description

### BACKGROUND

There are many truss structures that are used with vehicles to support equipment. The vehicles can include, for example, spacecraft and/or satellites. The equipment can include, for example, payloads and/or altitude controls. Each truss structure comprises struts coupled to each other via nodes.

### SUMMARY

This document concerns implementing systems and methods for providing a truss structure to structurally support equipment. The methods comprise: increasing a distance between a first end fitting coupled to a first node and a second end fitting coupled to a second node by actuating a flexure member to cause at least a cup member of the first end fitting to move in a first direction toward the first node; inserting a tube between the first and second end fittings; receiving a first end of the tube in an insert space of the second end fitting; decreasing the distance between the first end fitting and the second end fitting by actuating the flexure member to cause at least the cup member of the first end fitting to move in an opposing second direction away from the first node; and receiving a second end of the tube in an insert space of the first end fitting to provide a portion of the truss structure.

This document also concerns a truss structure. The truss structure comprises: first and second nodes; a tube extending between the first and second nodes; a first end fitting coupling the first node to a first end of the tube; and a second end fitting coupling the second node to an opposing second end of the tube. The first end fitting comprises a cup member and a flexure member. The flexure member is configured to be actuated to cause the cup member to move relative to the first node for changing a distance between a first end fitting and the second end fitting.

### BRIEF DESCRIPTION OF THE DRAWINGS

This disclosure is facilitated by reference to the following drawing figures, in which like numerals represent like items throughout the figures.
FIG. 1 provides an illustration of a system implementing the present solution.
FIG. 2 provides an illustration of a truss structure.
FIGS. 3A-3C (collectively referred to as "FIG. 3") provide illustrations that are useful for understanding how the truss structure of FIG. 2 may be built.
FIGS. 4A-4D (collectively referred to as "FIG. 4") provide illustrations that are useful for understanding how a novel seal is provided with the truss structure.
FIG. 5 provides a perspective view of a fitting.
FIG. 6 provides a cross-sectional view of the fitting shown in FIG. 5.
FIG. 7 provides a cross-sectional view of the fitting shown in FIG. 5 with a resilient element coupled thereto.
FIGS. 8A-8E (collectively referred to as "FIG. 8") provide illustrations showing a process for coupling a tube to a node using adjustable fittings.
FIGS. 9A-9B (collectively referred to as "FIG. 9") provide illustrations that is useful for understanding how a novel seal is provided at each interconnection point between a tube and a fitting.
FIG. 10 provides a perspective view of the sealing member shown in FIG. 9A.
FIG. 11 provides an illustration showing another system implementing the present solution.
FIG. 12 provides a flow diagram of an illustrative method for providing a truss structure to structurally support equipment.
FIG. 13 provides an illustration of telescoping elements.

### DETAILED DESCRIPTION

As noted above, there are many truss structures that are used with base support structure (e.g., vehicles or fixed support structures) to physically support equipment and/or facilitate coupling of the equipment to communication buses or circuits. The vehicles can include, for example, spacecraft and/or satellites. The equipment can include, for example, payloads and/or altitude controls. In many applications such as space applications, the overall design of the truss structure should be optimized to provide a rigid and lightweight structure with a low or near-zero coefficient of thermal expansion (CTE). A low or near-zero CTE provides a solution with no or a relatively small amount of expansion and/or contraction responsive to temperature changes. Conventional techniques for such design optimization are costly, time-consuming and labor-intensive. Also, conventional truss structures are often primarily aluminum structures or graphite structures. Aluminum and graphite are relatively expensive materials. Conventional truss structures also suffer from line-of-sight thermal distortion errors due to their brackets.

The present solution solves these drawbacks of conventional truss structures. The present solution also provides a solution for designing, analyzing and building complex 2D and/or 3D truss structures which have relatively high-performance, low-cost and/or low mass. However, the present solution will be discussed below in relation to a relatively simple truss structure. The present solution is not limited in this regard.

It should be noted that the present solution allows for efficient custom builds of truss structures (e.g., by leveraging additive manufacturing) and/or composite materials (e.g., carbon composites) to satisfy structural requirements of given applications. The custom build feature of the present solution is facilitated by the that fact that the angles between adjacent struts are not limited to certain defined angles (e.g., 30°, 45°, 60° and/or 90° angles). In effect, the truss structures are not forced into certain geometries due to the limited possible angles between adjacent struts. The nodes of the present solution are configured to allow any number of struts to be coupled thereto and allow for nearly any angle between adjacent struts.

The present solution may leverage 3D printed, molded or machined nodes to allow for full customization of the truss structure using novel features built into the nodes. These novel features include, but are not limited to, adjustable or telescoping node end fittings to facilitate assembly of a truss, in particular within the constraints of tooling, node end fittings configured to facilitate CTE tuning to near-zero for relatively high thermal stability, a novel sealing means using porous polymer(s) to yield a more robust injection bonding process by eliminating trapped air, and a double-shear bond that is relatively stronger than a single-shear bond (e.g., 1.5-2x stronger).

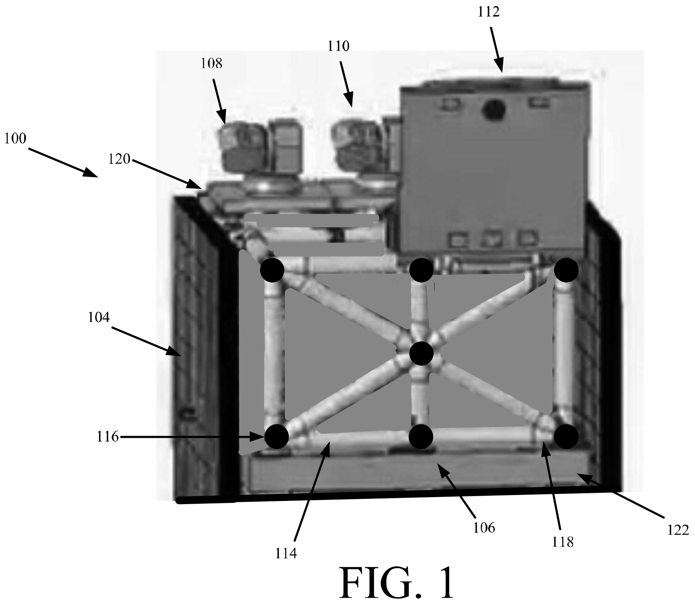

FIG. 1 provides an illustration of a system **100** comprising a housing **102** in which a truss structure **104** is disposed. System **100** can include, but is not limited to, a vehicle. The vehicle can include, for example, spacecraft and/or satellites. Truss structure **104** implements the present solution and is designed to structurally support equipment **108, 110, 112.** The equipment can include, but is not limited to, sensors (e.g., cameras), payloads, and/or attitude controls. In this regard, the truss structure **104** is coupled between equipment interfaces **120** and a vehicle interface **122.** These interfaces **120, 122** may, for example, facilitate electrical connection between electronic devices and a communications bus.

Truss structure **104** includes a plurality of struts **114** coupled to each other via nodes **116.** Truss structure **104** is designed to have a relatively high performance, low cost, and low mass. In this regard, the struts **114** may be formed of, for example, Invar, graphite, carbon composite(s), titanium, and/or steel. Each strut **114** is coupled to a node **116** via an end fitting **118.** Nodes **116** and/or end fittings **118** may be formed of the same or different material as the struts **114.** The struts **114,** nodes **116** and/or end fittings **118** may be 3D printed, injection molded, and/or machined. In some scenarios, a node **116** and/or an end fitting **118** are separate components. In other scenarios, a node **116** and/or respective end fitting(s) **118** are integrally formed as a single piece.

The novel way in which the struts **114** are attached to the nodes **116** will become evident as the discussion progresses. Still, it should be noted here that the nodes **116** may comprise adjustable end fittings **118.** The adjustable end fittings **118** may facilitate (i) assembly of the truss structure, and (ii) CTE tuning to near-zero for relatively high thermal stability. With regard to feature (i), the end fittings **118** include adjustable features for changing a distance between the end fitting and a node **116.** The adjustable features can include, but are limited to, threaded elements, telescoping elements, other elongating/shorting structures, and/or other expandable/collapsable structures.

The adjustable end fittings **118** may employ a novel sealing means for creating and maintaining a seal between the end fitting and each strut, while accounting for part size tolerances and/or allowing movement and/or angular misalignment of the strut relative to the end fitting within a range of degrees (e.g., 0° - 1°, 0° - 2°, 0° - 3°, 0° - 4°, 0° - 5°, ... , 0° - N°, 1° - 5°, 2° - 5°, 3° - 5°, 4° - 5°, 0° - N°, etc., where **N** is any integer greater than zero). The sealing means can include, but is not limited to, a porous polymer material and/or a porous foam. For example, the sealing means comprises a porous expanded Polytetrafluoroethylene (PTFE) or a porous Teflon to yield a relatively robust injection bonding process by eliminating trapped air (to ensure voids are not created within the bonding area). Porous PTFE comprises an expanded cell network with cells to allow air to escape but not a fluid or liquid. The injection bonding process and air removal will be discussed in more detail below. Still, it should be noted here that a double-shear bond is provided using a robust sealing means configured to allow trapped air to escape but not the bonding fluid during the injection bonding process. The present solution is not limited in this regard.

With regard to above-mentioned feature (ii), a near-zero CTE may be tuned by selecting different materials for each of two or more of struts **114,** nodes **116,** and end fittings **118.** For example, end fitting **118** may be made of aluminum, while node **116** is formed of stainless steel and strut **114** is formed of titanium. The present solution is not limited to the particulars of this example.

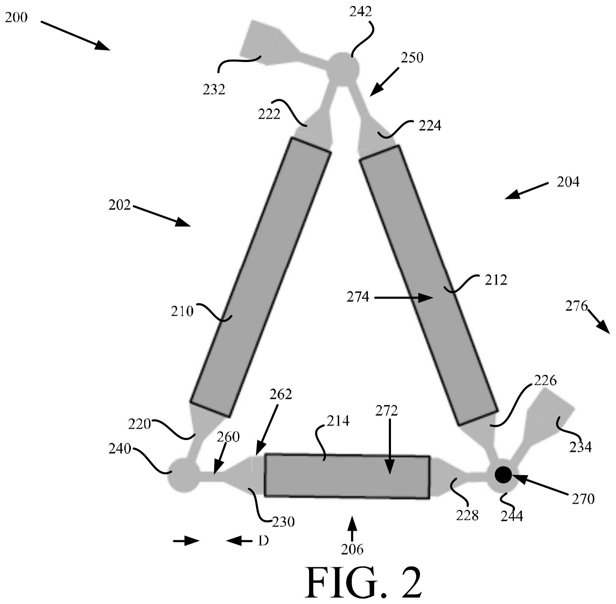

FIG. 2 provides an illustration of a truss structure **200** implementing the present solution. Truss structure **200** may be included in truss structure **100** of FIG. 1 and/or facilitate further understanding of truss structure **100** since truss structure **100** may be the same as or similar to truss structure **200.**

Truss structure **200** comprises three branches **202, 204, 206.** Each branch comprises a tube **210, 212, 214,** end fittings **220, 222, 224, 226, 228, 230, 232, 234,** and nodes **240, 242, 244.** Tubes **210, 212, 214** may also be referred to as struts. Tubes **210-214,** end fittings **220-234** and/or nodes **240-244** may be formed of the same material or different materials. Tubes **210-214,** end fittings **220-234** and/or nodes **240-244** may be formed of, for example, Invar, Kovar, graphite, carbon composite(s), titanium, and/or steel. If all tubes **210-214** are made of a single graphite tube option and all nodes **240-244** are made from the same material, then the lower tube **214** would have a higher CTE. If the flexure sections **250** of the end fittings **220-234** are made from a threaded rod of various materials, then the lower tube **214** could use an Invar stud to balance out the CTE with the upper two tubes **210** and **212.** Other configurations are contemplated for tuning the CTE of the branches **202-206.** A net-zero CTE may be desired for thermal stability of the truss structure **200.** Adding more materials enables an optimization to near-zero CTE for any length of tube. Having only two materials (e.g., titanium and graphite) may result in a net strut CTE of 4.4 ppm/C at ten inches. Having four or more materials (e.g., Invar, titanium and stainless steel) may provide a balance of material CTEs to result in a near-zero CTE for a branch.

Tubes **210-214,** end fittings **220-234** and/or nodes **240-244** may be 3D printed, injection molded, and/or machined. Nodes provide a common vertex for all strut lines of action to eliminate eccentricities. For example, node **244** provides a common vertex **270** for strut lines **272, 274, 276.**

In FIG. 2, nodes and end fittings are integrally formed. For example, end fittings **220, 230** are integrally formed with node **240** to provide a single piece. End fittings **222, 224, 232** are integrally formed with node **242** to provide a single piece. End fittings **226, 228, 234** are integrally formed with node **244** to provide a single piece. The present solution is not limited in this regard. The nodes and end fittings may be formed as separate components in other scenarios.

Each end fitting comprises a proximal end **260** coupled to a node and a distal end **262** coupled to a tube. Each tube **210, 212, 214** is coupled between two nodes via respective opposing end fittings. For example, tube **210** is connected between nodes **240, 242** via opposing end fittings **220, 222.** Tube **212** is connected between nodes **242, 244** via opposing end fittings **224, 226.** Tube **214** is connected between nodes **240, 244** via opposing end fittings **228, 230.** Other tubes may be connected between end fittings **232, 234** and other opposing end fittings not shown in FIG. 2.

Proximal end **260** of at least one of the two end fittings for each tube is configured to allow a distance **D** to be adjusted to facilitate installation of a tube in truss structure **200.** For example, end fitting **230** has a proximal end **260** coupled to node **240** and a distal end **262** coupled to tube **214.** Proximal end **260** comprises adjustable feature(s) to facilitate adjustment of distance **D.** The adjustable feature(s) can include, but are limited to, threaded elements, telescoping elements, other elongating/shorting structures, and/or other expandable/collapsable structures. The telescoping features should be locked in position (or rigidized after telescoping) prior to completion of the truss structure. The adjustable feature(s) may comprise a rod flexure section to limit bending moments for improved strength margins. Distal end **262** comprises: a bondline gap (not visible in FIG. 2) around or on either side of the tube to allow for part and/or assembly tolerances of N degrees per strut (e.g., approx. 2°); and a sealing member (not visible in FIG. 2) configured to dam a bonding agent (not visible in FIG. 2) within an internal channel (not visible in FIG. 2) of the end fitting while allowing trapped air to pass therethrough. A double-shear bond may provide high strength allowing for smaller diameter tubes.

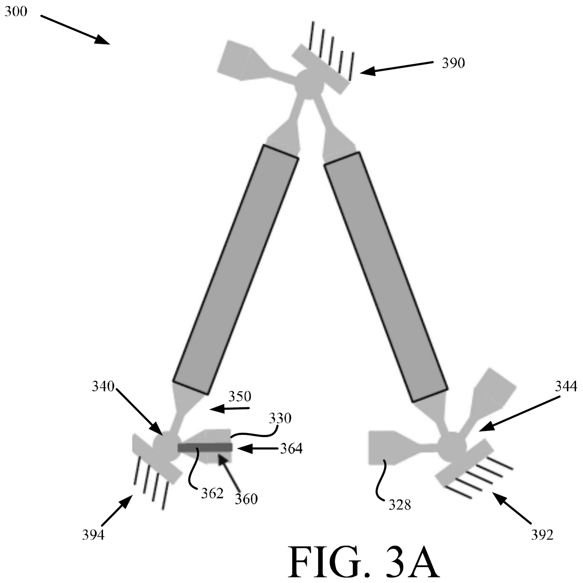

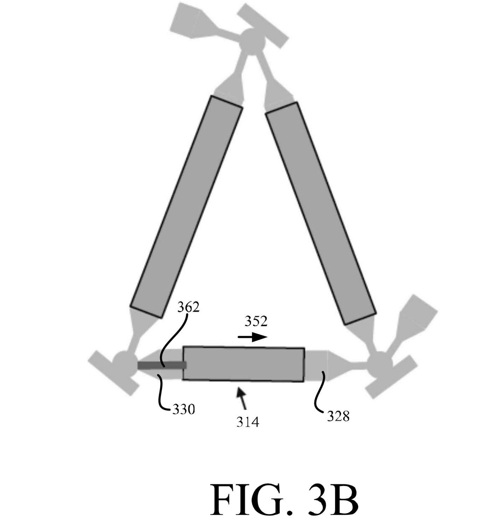

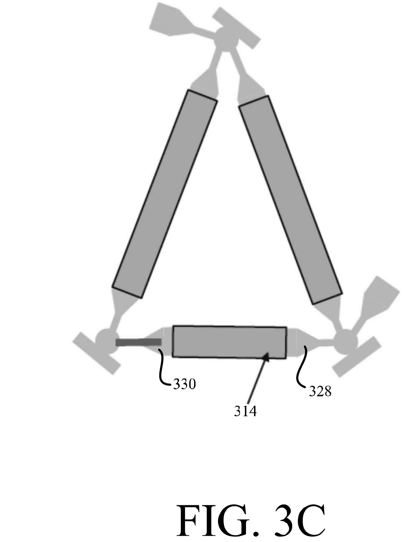

FIG. 3 provides illustrations showing how a truss structure **300** may be built in a space between interfaces **290, 292, 294** of a 3D assembly. Truss structure **300** may be included in truss structure **100** of FIG. 1 and/or facilitate further understanding of truss structure **100** since truss structure **100** may be the same as or similar to truss structure **300.** Adding a third strut or tube to form a triangular structure is relatively difficult when the triangle is being constrained by the 3D assembly, as would typically occur when rigid tooling is used to locate critical interfaces attached to the nodes. The present solution addresses this difficulty by making it relatively easy to install the third strut or tube. The manner in which the third strut or tube is installed in the truss structure **300** will now be discussed in detail.

Starting with FIG. 3A, an end fitting **330** is manipulated or actuated to cause it to retract or otherwise move (e.g., slide, rotate, collapse, etc.) in direction **350** toward node **340.** This adjustment of the end fitting's position relative to node **340** may be (i) facilitated by adjustable feature **360** and (ii) performed until end fitting **330** contacts or comes in proximity to node **340.** Adjustable feature **360** can include, but is not limited to, a threaded post **362** configured to threadingly engage threads formed in an aperture **364** of the end fitting **330.**

Next as shown in FIG. 3B, strut or tube **314** is inserted between end fitting **330** and opposing end fitting **328.** The strut or tube **314** is then slid in direction **352** towards end fitting **328** and away from end fitting **330.** End fitting **330** is then manipulated or actuated to cause it to move in direction **352.** For example, end fitting **330** is caused to rotate around threaded post **362** until strut or tube **314** is securely retained between end fittings **328, 330,** as shown in FIG. 3C. The strut or tube **314** is injection bonded to end fittings **328, 330.**

It should be noted that the present solution is not limited to the truss structure architecture shown in FIG. 3. For example, at least one adjustable end fitting may be used at one or both ends of each of the three struts or tubes for coupling it to node(s).

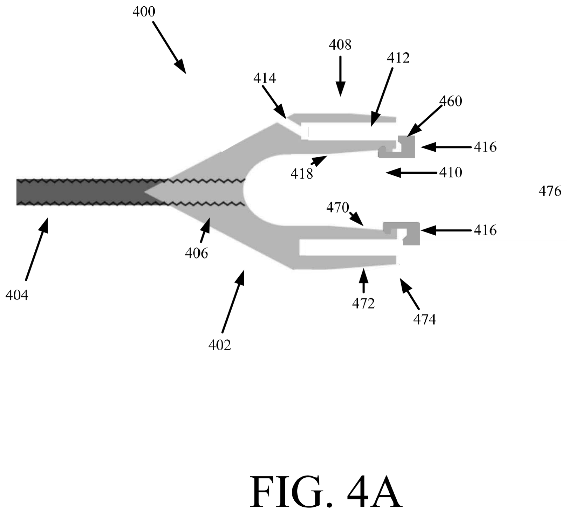

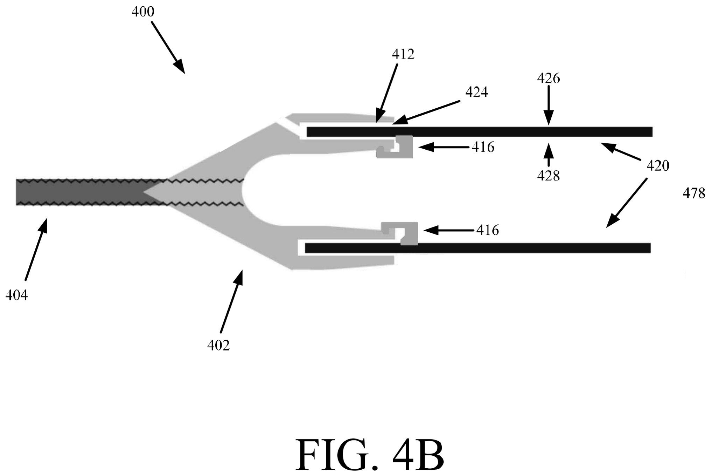

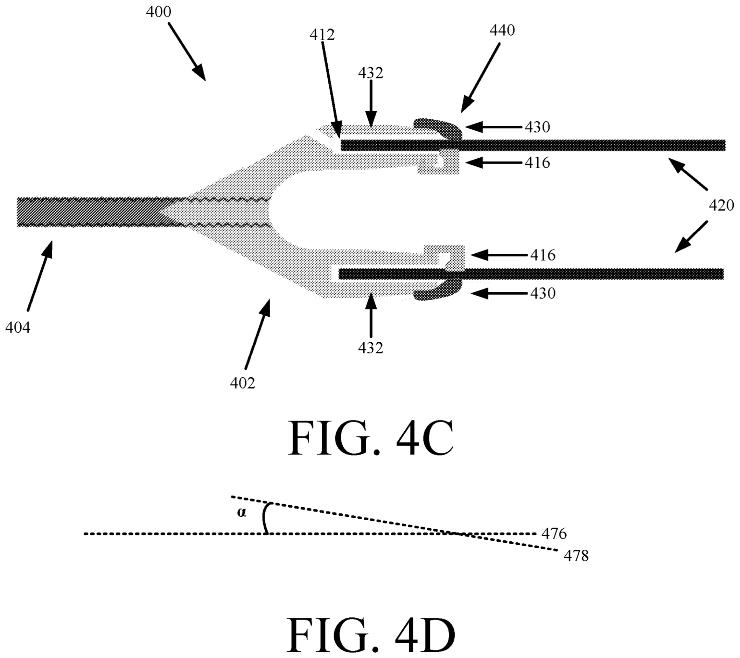

FIG. 4 provides cross-sectional views that are useful for understanding features of a double-shear injection bonded end fitting **400.** End fittings **118** of FIG. 1, **220-234** of FIG. 2, and/or **328-330** of FIG. 3 may be the same as or similar to end fitting **400.** Thus, the discussion of end fitting **400** is sufficient for further understanding end fittings **118, 220-234, 328-330.**

End fitting **400** comprises a cup member **402** and a flexure member **404.** Cup member **402** comprises tapered adherends or surfaces **470, 472** to reduce shear peaking and bondline stresses at its end **474.** Flexure member **404** can include, but is not limited to, a threaded rod as shown or other structure (e.g., a telescoping structure). Flexure member **404** may be formed of the same or different material as the cup member **402.** Members **402, 404** may be formed of, for example, Invar, graphite, carbon composite(s), titanium, and/or steel.

Cup member **402** comprises a base structure **406** having a generally U-shaped cross-section profile. A sidewall **408** of the base structure **406** extends around a hollow area **410.** Hollow area **410** is sized and shaped to allow the flexure member **404** to move into and out of the base structure **406** without being obstructed.

Sidewall **408** has an annular insert space or cavity **412** for receiving a strut or tube **420** as shown in FIG. 4B. A sealing member **416** is coupled to an inside wall **418** of the base structure **406** defining the insert space **412.** Any known or to be known coupling technique can be used here (e.g., a snap-fit, interlocking structure, adhesive, etc.). It should be noted that sufficient pre-load through interference should be achieved to ensure sealing at the coupling interface to resist injection bonding pressures in, for example, the 5-30 psig range. For example, sealing member **416** may be configured to create interference with a node, barb or other projection **460** and strut/tube **420.** The present solution is not limited in this regard. Sealing member **416** may also comprise a metal to create a dissipative ground path between the strut/tube **420** and the base structure **406.**

Sealing member **416** extends around the entire circumference of wall **418.** Sealing member **416** is configured to: (i) hold strut or tube **420** in place while the truss structure is being built due to a frictional engagement between the sealing member **416** and strut/tube **420;** and (ii) allow movement of the strut/tube **420** relative to the end fitting **400** while maintaining the seal therebetween prior to and after the truss structure **400** is built. With regard to purpose or function (i), sealing member **416** may be configured to apply a radial force on the strut/tube **420** in an outward direction. With regard to purpose or function (ii), the sealing member **416** is configured to compress or otherwise deform when the strut/tube applies a force thereon and return to its original uncompresses or non-deformed state when the force is no longer being applied thereto by the strut/or tube **420.** The strut or tube **420** can slide against and/or apply forces on the sealing member **416** without damaging the same. Sealing member **416** can include, but is not limited to, a porous polymer material and/or a porous foam. For example, the sealing member **416** comprises a porous expanded PTFE, a porous Teflon, and/or a porous Fluoroplastic foam.

It should be noted that insert space **412** is sized so that a bondline gap **424** is provided on one or both sides **426, 428** of the strut or tube **420.** The bondline gap is sized to allow for tolerance take-up (e.g., liquid shim). For example, a 25 mil bondline gap (0.025 inches) is provided on either side of the strut or tube. The present solution is not limited to the particulars of this example. The bondline gap **424** allows movement and/or angular misalignment of the strut/tube **420** relative to the end fitting **400** within a range of degrees (e.g., 0° - 1°, 0° - 2°, 0° - 3°, 0° - 4°, 0° - 5°, ... , 0° - N°, 1° - 5°, 2° - 5°, 3° - 5°, 4° - 5°, 0° - N°, etc., where N is any integer greater than zero). When an angular alignment exists, a center axis **476** (see FIG. 4A) of the end fitting **400** and a center axis **478** (see FIG. 4B) of the strut/tub extend parallel and overlap each other. In contrast, when an angular misalignment exists, the center axis **476** (see FIG. 4A) of the end fitting **400** and the center axis **478** (see FIG. 4B) of the strut/tub do not extend parallel to each other, but instead are angled relative to each other as shown in FIG. 4D. The angle α between the center axis **476, 478** falls within the range of degrees of angular misalignment allowed by the bondline gap **424.**

Another sealing member **430** (shown in FIG. 4C) is installed after the strut or tube **420** has been received in insert space **412.** Sealing member **430** is coupled to an outside wall **432** of the base structure **406** defining the insert space **412.** Sealing member **430** may also be coupled the strut or tube **420.** Any known or to be known coupling technique can be used here. Sealing member **430** may be formed of the same or different material as sealing member **416.** In some scenarios, sealing member **430** may be in the form of a tape or foam. Sealing member **430** extends around the entire circumference of wall **432.** Sealing member **430** is configured to: (i) hold strut or tube **420** in place while the truss structure is being built due to a frictional engagement between the sealing member **430** and strut/tube **420;** and (ii) allow movement of the strut/tube **420** relative to the end fitting **400** while maintaining the seal therebetween prior to and after the truss structure **400** is built. With regard to purpose or function (i), sealing member **430** may apply a radial force on the strut/tube **420** in an inward direction. With regard to purpose or function (ii), the sealing member **430** is configured to compress or otherwise deform when the strut/tube applies a force thereon and return to its original uncompresses or non-deformed state when the force is no longer being applied thereto by the strut/or tube **420.** The strut or tube **420** can slide against and/or apply forces on the sealing member **430** without damaging the same.

One or more injection holes **414** are provided around the perimeter of the base structure **406** to allow a bonding agent to be injected into space **412** for bonding the strut or tube **420** to the end fitting **400.** An injection hole may be provided every **M** degrees, where **M** is an integer between 0 and 180. The bonding agent acts like a liquid shim. The bonding agent can include, but is not limited to, an epoxy paste or other adhesive. For example, the bonding agent may be a high-wetting low-viscosity epoxy referred to as Hysol 9396^{®}. The present solution is not limited to the particulars of this example.

During the bonding injection process, sealing members **416, 430** (i) hold strut or tube **420** in place while the bonding injection process is being performed due to a frictional engagement between the sealing members and strut/tube, (ii) provide a bonding agent dam, and (iii) provide an air vent. With regard to purposes or functions (ii) and (iii), sealing members **416, 430** are configured to prevent the bonding agent from traveling out of the insert space **412** at distal end **440,** while allowing air to vent out of insert space **412.** Sealing member **430** is also configured to create a clean fillet.

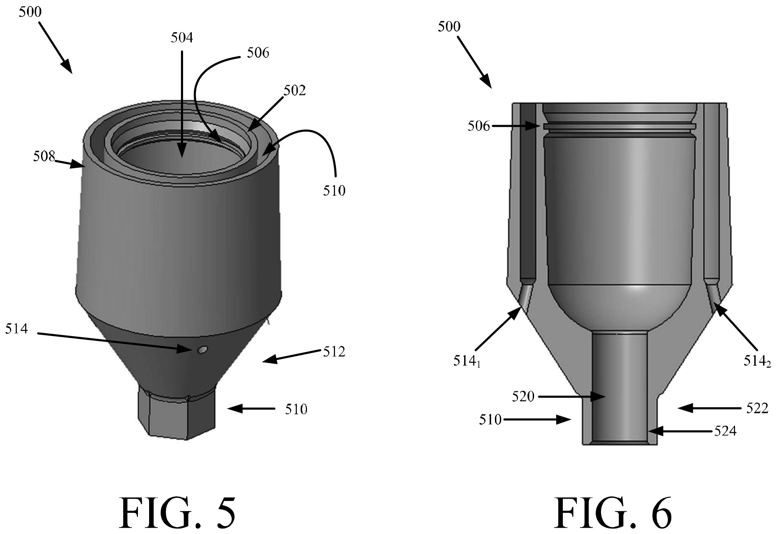

FIG. 5 provides a perspective view of a cup member **500** for an end fitting. Cup member **402** of FIG. 4 may be the same or similar to cup member **500.** As such, the discussion of cup member **500** is sufficient for understanding cup member **406.**

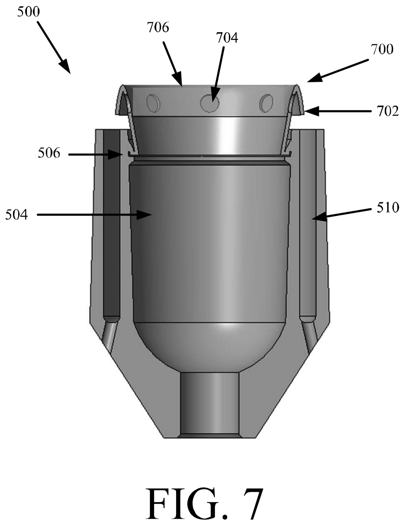

Cup member **500** comprises an inner sidewall **502** defining an internal open area **504.** An optional retention feature **506** is provided on or in the inner sidewall **502** to facilitate a coupling of a spring retention member and/or a sealing member to the cup member **500.** The spring retention member will be discussed below in relation to FIG. 7. Inner sidewall **502** comprises a tapered adherend. An outer sidewall **508** is also provided. Outer sidewall **508** also comprises a tapered adherend. Sidewalls **502, 508** define an insert space **510** therebetween which is sized and shaped for receiving a strut or tube. An optional hex shaped structure **510** may be provided at an end **512** of the cup member **500** for facilitating movement or actuation of the cup member about a threaded flexure member (not shown in FIG. 5). One or more injection holes **514** are provided to facilitate injection of a bonding agent into the insert space **510** for coupling a strut or tube to the cup member **500.**

A cross-sectional view of the cup member **500** is provided in FIG. 6. As seen in FIG. 6, at least two injection holes **514₁**, **514₂** are provided. Injection holes **514₁**, **514₂** are spaced 180° from each other. The present solution is not limited in this regard. Any number of injection holes may be provided with any spacing therebetween.

Cup member **500** has an aperture **520** formed in an end **522** thereof. Aperture **520** is sized and shaped to receive a flexure member (e.g., flexure member **404** of FIG. 4). Threads (not shown) or other features may be provided on an inner sidewall **524** defining aperture **520** for engaging with the flexure member to facilitate end fitting length adjustments.

FIG. 7 also provides an illustration showing a spring retention member **700** coupled to the cup member **500** via retention feature **506.** Spring retention member **700** may include, but is not limited to, a conductive material to provide a dissipative ground path between a strut/tube and the cup member **500.** For example, spring retention member **700** may be formed of stainless steel. The present solution is not limited in this regard. Spring retention member **700** extends the entire circumference of the cup member **500** and is configured to engage the strut or tube. In this regard, it should be noted that an engagement portion **702** of the spring retention member **700** contacts and applies an outward radial force or pressure on the strut or tube when the strut/tub is inserted into insert space **510.**

Engagement portion **702** has one or more holes **704** formed therein to allow air to vent into open area **504** of cup member **500** and/or into the strut/tube during an injection bonding process. A sealing member **706** is coupled to the engagement portion **702** so as to cover the holes **704.** In this way, the sealing member **706** has multiple functions: (i) to allow air to escape but not the bonding agent during the injection bonding process; and (ii) to facilitate creation of a seal between the strut/tube and the end fitting.

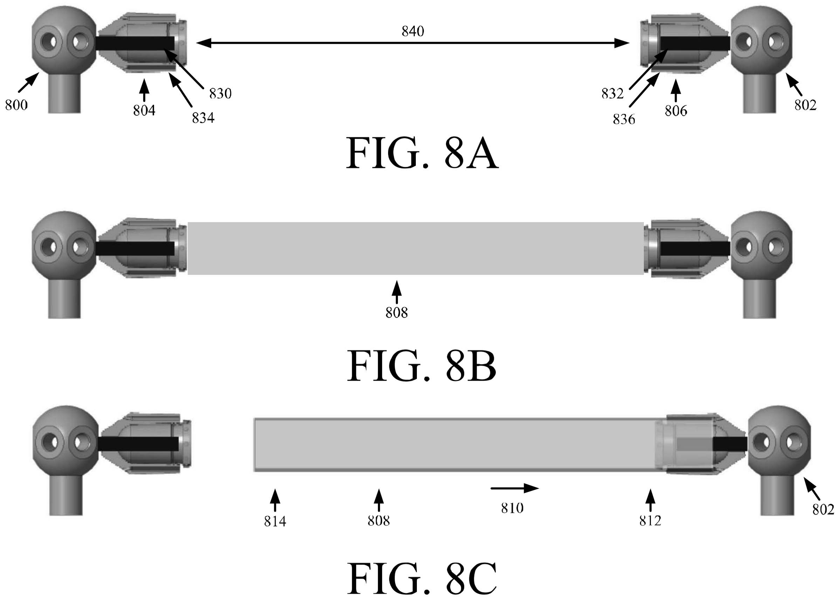

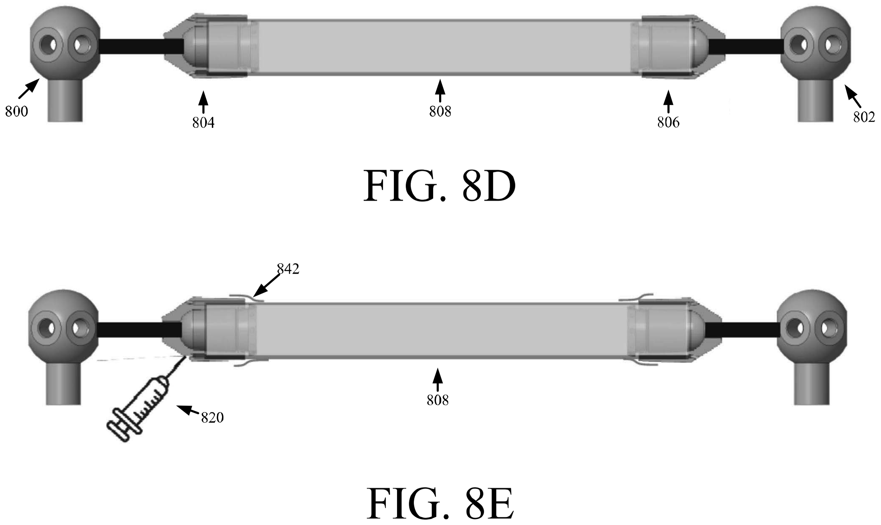

FIG. 8 provides illustrations that are useful for understanding how a strut or tube is coupled between two nodes **800, 802** using adjustable end fittings **804, 806** of the present solution. In a first step of FIG. 8A, the end fittings **804, 806** are actuated to increase the distance **840** therebetween. For example, each end fitting is rotated to convert rotational movement to linear movement in a direction toward a respective node. The present solution is not limited in this regard. Other techniques may be employed to change distance **840.**

Next in FIG. 8B, a tube **808** is inserted in between end fittings **804, 806.** Tube **808** is then slid in a direction toward one of the nodes. For example, as shown in FIG. 8C, tube **808** is slid or otherwise moved in direction **810** towards node **802** until its end **812** is fully inserted into an insert space of end fitting **806.** The present solution is not limited in this regard. Tube **808** could alternatively be slid or otherwise moved in an opposing direction until its end **814** is fully inserted into an insert space of end fitting **804.** As shown in FIG. 8D, the end fitting **804, 806** are actuated to decrease the distance **840** therebetween. In this way, tube **808** is coupled to and retained in between nodes **800, 802** via end fittings **804, 806.**

Next in FIG. 8E, the outer seal **842** is installed. An injection bonding process is performed to bond tube **808** to end fitting **804, 806.** An injection tool **820** may be employed to facilitate injection of the bonding agent into the insert spaces of the end fitting **804, 806.** Any known or to be known injection bonding process can be used here.

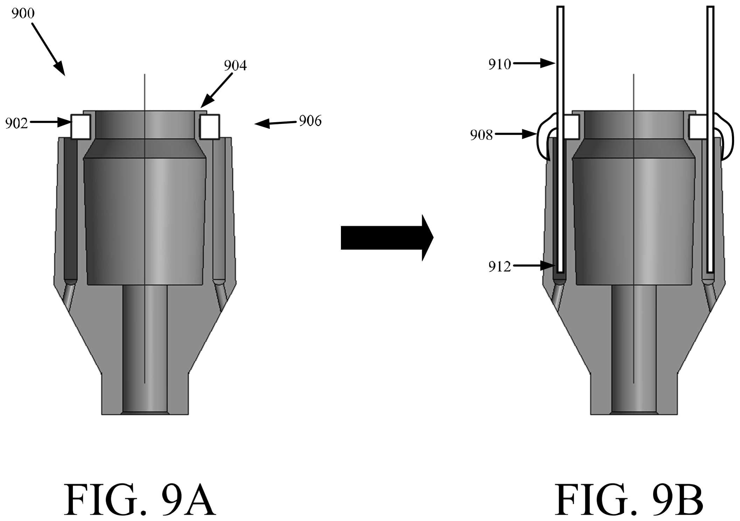

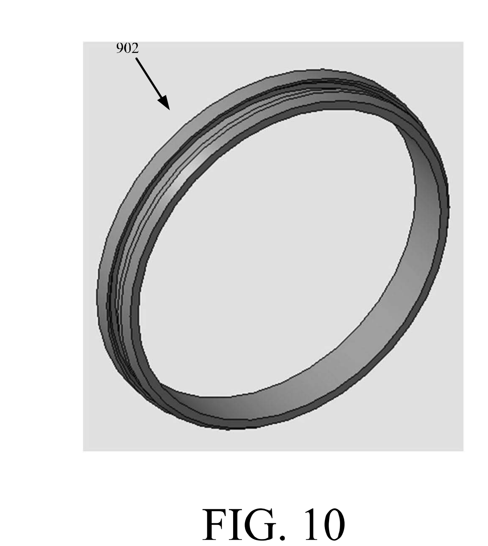

FIG. 9 provides cross-sectional view of another cup member **900** implementing the present solution. Cup member **900** comprises an annular sealing member **902** disposed around a flange **904** provided at end **906** thereof. A perspective view of the annular sealing member **902** is provided in FIG. 10. Another annular sealing member **908** is attached to the assembly after a tube **910** has been inserted into insert space **912.** Sealing member **908** is shown as comprising a tape wrapped around end **906** of the cup member **900.** The present solution is not limited in this regard. Sealing member **908** may comprise a band-like structure that is the same as or similar to that of sealing member **902** shown in FIG. 10.

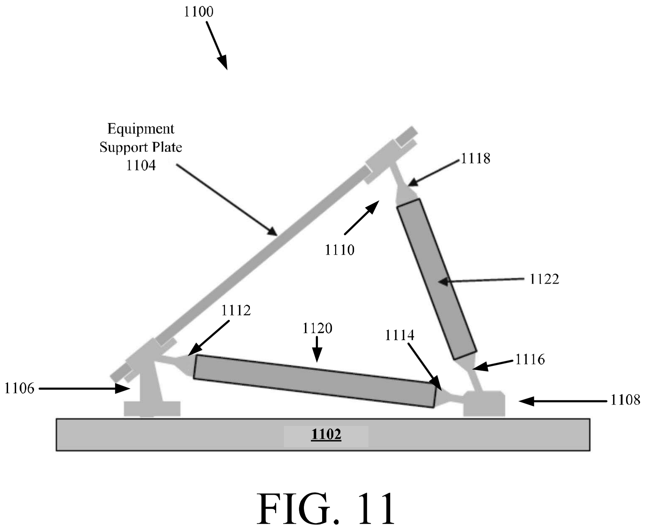

The present solution can be used in other applications than that discussed above. For example, the present solution can be used in angled bracket mounting applications. One such application is shown in FIG. 11.

FIG. 11 provides an illustration of a truss structure **1100** implementing the present solution. Truss structure **1100** may be used to mount equipment on angled brackets **1106, 1108, 1110.** The angled bracket design on conventional truss structures causes about forty percent of the thermal distortion pointing error. The angled brackets **1106, 1108, 1110** of the present solution are designed to reduce, minimize or eliminate any thermal distortion pointing error caused thereby. Brackets **1106, 1108, 1110** can include end fittings **1112, 1114, 1116, 1118** that are the same as or similar to end fitting(s) **118** of FIG. 1, **220-234** of FIG. 2, **330** of FIG. 3, **400** of FIG. 4, and/or **804-806** of FIG. 8. Accordingly, fittings **1112-1118** are configured to allow installation of struts or tubes **1120, 1122** in the assembly being built on base structure **1102.**

Plate **1104** may be coupled to brackets **1106, 1110** for structurally supporting equipment. Plate **1104** may optionally have a triangular shape with a center cut-out. Struts or tubes **1120, 1122** share a common vertex at center of equipment interface and center of base structure interface. A flexure length may be sized so that the overall strut CTE approaches zero.

In view of the forgoing discussion, the present solution provides a structure system approach which will reduce mass of truss structures. For example, a truss structure of the present solution may have 55% less mass as compared to a corresponding conventional truss structure. The truss structures of the present solution also have a high thermal distortion stability. For example, a truss structure of the present solution may have reduced line-of-sight distortion by 40%. The nodes of the truss structures have a novel design that allows a high level of customization through 3D printing (i.e., any number of struts at any angle coming into any node). Adjustable end fittings allow for: assembly of a truss structure within tooled or constrained 3D system of struts; CTE tuning of each individual segment (different materials for node, flexure member, cup member, and/or tube) to create a near-zero CTE structure; and/or relief of moments in the truss structure using flexures. The porous seals allow for injection boding without trapping air in the end fittings. Trapping air in the end fittings could lead to voids and weaker/unpredictable strength. Flexible internal seal and generous bond cavity allows for take-up in part and assembly tolerances.

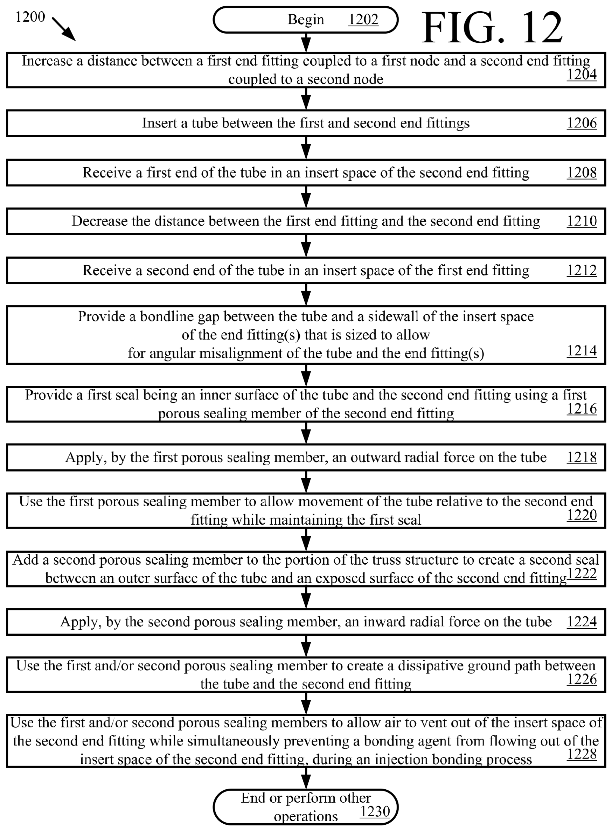

FIG. 12 provides a flow diagram of an illustrative method **1100** for providing a truss structure (e.g., truss structure **104** of FIG. 1, **200** of FIG. 2, **300** of FIG. 3, **400** of FIG. 4 and/or **1100** of FIG. 11) to structurally support equipment (e.g., equipment **108, 110** and/or **112** of FIG. 1). The operations of method **1200** may be performed in the same or different order than shown. Method **1200** may include more or less operations than shown. For example, CTE tuning operations may be performed between block **1202** and **1204.** These CTE tuning operations may involve: tuning the CTE of the truss structure to have a near-zero value by using different materials for at least two of the first end fitting, the first node, and the tube; and/or tuning CTE of the truss structure to have a near-zero value by using different materials for the flexure member and a cup member of the first end fitting.

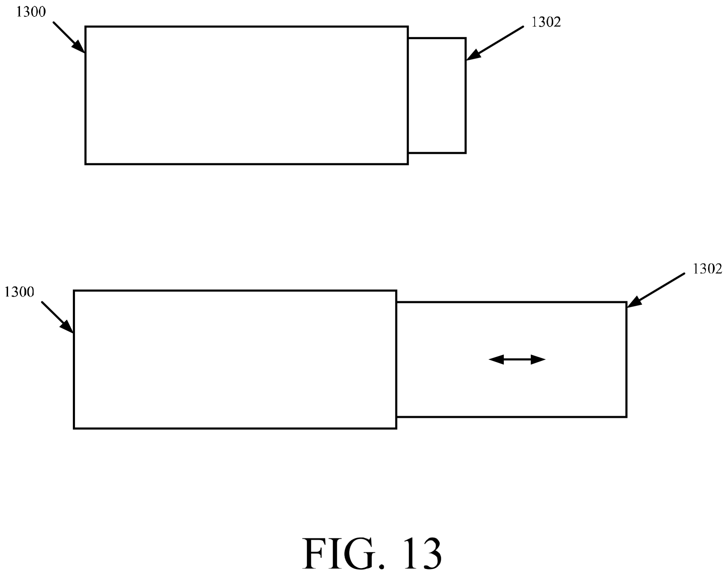

In the scenario of FIG. 12, method **1200** begins with block **1202** and continues to block **1204** where a distance (e.g., distance **840** of FIG. 8) is increased between a first end fitting (e.g., end fitting **230** of FIG. 2, **330** of FIG. 3, or **804** of FIG. 8) coupled to a first node (e.g., node **240** of FIG. 2, node **340** of FIG. 3, or **800** of FIG. 8) and a second end fitting (e.g., end fitting **228** of FIG. 2, **328** of FIG. 3, and/or **806** of FIG. 8) coupled to a second node (e.g., node **244** of FIG. 2, **344** of FIG. 3, and/or **802** of FIG. 2). This can be accomplished or achieved by actuating a flexure member (e.g., flexure member **250** of FIG. 2, **362** of FIG. 3, **404** of FIG. 4, and/or **830** of FIG. 8) to cause at least a cup member (e.g., cup member **402** of FIG. 4, **500** of FIG. **5****, 834** of FIG. 8, and/or **900** of FIG. 9) of the first end fitting to move in a first direction (e.g., direction **350** of FIG. 3) toward the first node. The flexure member comprises a threaded rod (e.g., as shown in FIG. 4) or telescoping elements (e.g., telescoping element **1300, 1302** of FIG. 13). Block **1204** may also involve allowing an amount by which the flexure member extends into the cup member of the first end fitting to vary during said actuating thereof.

Next in block **1206,** a tube (e.g., tube **210, 212, 214** of FIG. 2, **314** of FIG. 3, **420** of FIG. 4, **808** of FIG. 8, **910** of FIG. 9, **1120,** and/or **1122** of FIG. 11) is inserted between the first and second end fittings. First end of the tube is received in an insert space (e.g., insert space **412** of FIG. 4 and/or **510** of FIG. 5) of the second end fitting, as shown by block **1208.**

In block **1210,** the distance between the first end fitting and the second end fitting is decreased. This can be accomplished by: actuating the flexure member to cause at least the cup member of the first end fitting to move in an opposing second direction (e.g., direction **352** of FIG. 3) away from the first node; and/or allowing an amount by which the flexure member extends into the cup member of the first end fitting to vary during said actuating. A second end of the tube is received in an insert space of the first end fitting as shown by block **1212.**

Method **1200** may continue with operations of blocks **1214-1228.** These operations involve: (**1214**) providing a bondline gap (e.g., bondline gap **424** of FIG. 4) between the tube and a sidewall of the insert space of the end fitting(s) that is sized to allow for angular misalignment of the tube and the end fitting(s); (**1216**) providing a first seal being an inner surface of the tube and the second end fitting using a first porous sealing member of the second end fitting; (**1218**) applying, by the first porous sealing member, an outward radial force on the tube to facilitate retention of the first end of the tube in the insert space of the second end fitting; (**1220**) using the first porous sealing member to allow movement of the tube relative to the second end fitting while maintaining the first seal; (**1222**) adding a second porous sealing member to the portion of the truss structure to create a second seal between an outer surface of the tube and an exposed surface of the second end fitting; (**1224**) applying, by the second porous sealing member, an inward radial force on the tube; (**1226**) using the first and/or second porous sealing member to create a dissipative ground path between the tube and the second end fitting; and/or (1**2**28) using the first and/or second porous sealing members to allow air to vent out of the insert space of the second end fitting while simultaneously preventing a bonding agent from flowing out of the insert space of the second end fitting, during an injection bonding process. Subsequently, method **1200** continues to block **1230** where it ends or other operations are performed (e.g., return to **1202**).

In view of the forgoing discussion, the present solution concerns implementing systems and methods for providing a truss structure to structurally support equipment, comprising: increasing a distance between a first end fitting coupled to a first node and a second end fitting coupled to a second node by actuating a flexure member to cause at least a cup member of the first end fitting to move in a first direction toward the first node; inserting a tube between the first and second end fittings; receiving a first end of the tube in an insert space of the second end fitting; decreasing the distance between the first end fitting and the second end fitting by actuating the flexure member to cause at least the cup member of the first end fitting to move in an opposing second direction away from the first node; and receiving a second end of the tube in an insert space of the first end fitting to provide a portion of the truss structure. The flexure member may include, but is not limited to, a threaded rod or telescoping elements.

The method may also comprise: allowing an amount by which the flexure member extends into the cup member of the first end fitting to vary during said actuating; providing a bondline gap between the tube and a sidewall of the insert space of the second end fitting that is sized to allow for angular misalignment of the tube and the second end fitting; providing a first seal being an inner surface of the tube and the second end fitting using a first porous sealing member of the second end fitting; applying, by the first porous sealing member, an outward radial force on the tube to facilitate retention of the first end of the tube in the insert space of the second end fitting; using the first porous sealing member to allow movement of the tube relative to the second end fitting while maintaining the first seal; using the first porous sealing member to allow air to vent out of the insert space of the second end fitting while simultaneously preventing a bonding agent from flowing out of the insert space of the second end fitting, during an injection bonding process; using the first porous sealing member to create a dissipative ground path between the tube and the second end fitting; adding a second porous sealing member to the portion of the truss structure to create a second seal between an outer surface of the tube and an exposed surface of the second end fitting; applying, by the second porous sealing member, an inward radial force on the tube; using the first and second porous sealing members to allow air to vent out of the insert space of the second end fitting while simultaneously preventing a bonding agent from flowing out of the insert space of the second end fitting, during an injection bonding process; and/or tuning a coefficient of thermal expansion of the truss structure to have a near-zero value by using different materials for at least two of the first end fitting, the first node, and the tube and or by using different materials for the flexure member and a cup member of the first end fitting.

The present solution also concerns a truss structure. A coefficient of thermal expansion of the truss structure may be tuned to have a near-zero value by using different materials for at least two of the first end fitting, the first node, and the tube and or by using different materials for the flexure member and a cup member of the first end fitting. The truss structure comprises: first and second nodes; a tube extending between the first and second nodes; a first end fitting coupling the first node to a first end of the tube; and a second end fitting coupling the second node to an opposing second end of the tube. The first end fitting comprises a cup member and a flexure member configured to be actuated to cause the cup member to move relative to the first node for changing a distance between a first end fitting and the second end fitting. The distance may be increased when the cup member is caused to move in a direction towards the first node, and decreased when the cup member is caused to move in a direction away from the first node. The flexure member can include, but is not limited to, a threaded rod or telescoping elements.

The first end fitting comprises an insert space sized and shaped to receive the first end of the tube, and second end fitting comprises an insert space sized and shaped to receive the second end of the tube. The first end fitting may be configured to (i) allow an amount by which the flexure member extends into the cup member to vary during an actuation of the flexure member. A bondline gap may be provided between the tube and a sidewall of an insert space of the first or second end fitting that is sized to allow for angular misalignment of the tube and the first or second end fitting.

The truss structure may also comprise a first porous sealing member configured to: (i) provide a first seal being an inner surface of the tube and the first or second end fitting; (ii) apply an outward radial force on the tube to facilitate retention of the first or second end of the tube in the insert space of the first or second end fitting; (iii) allow movement of the tube relative to the second or second end fitting while maintaining the first seal; (iv) allow air to vent out of the insert space of the first or second end fitting while simultaneously preventing a bonding agent from flowing out of the insert space of the first or second end fitting, during an injection bonding process; and/or (v) create a dissipative ground path between the tube and the second end fitting.

The truss structure may also comprise a second porous sealing member configured to (i) create a second seal between an outer surface of the tube and an exposed surface of the first or second end fitting; and/or (ii) allow air to vent out of the insert space of the first or second end fitting while simultaneously preventing a bonding agent from flowing out of the insert space of the first or second end fitting, during an injection bonding process.

The described features, advantages and characteristics disclosed herein may be combined in any suitable manner. One skilled in the relevant art will recognize, in light of the description herein, that the disclosed systems and/or methods can be practiced without one or more of the specific features. In other instances, additional features and advantages may be recognized in certain scenarios that may not be present in all instances.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

Although the systems and methods have been illustrated and described with respect to one or more implementations, equivalent alterations and modifications will occur to others skilled in the art upon the reading and understanding of this specification and the annexed drawings. In addition, while a particular feature may have been disclosed with respect to only one of several implementations, such feature may be combined with one or more other features of the other implementations as may be desired and advantageous for any given or particular application. Thus, the breadth and scope of the disclosure herein should not be limited by any of the above descriptions. Rather, the scope of the invention should be defined in accordance with the following claims and their equivalents.

## Claims

1. A method for providing a truss structure to structurally support equipment, comprising:
increasing a distance between a first end fitting coupled to a first node and a second end fitting coupled to a second node by actuating a flexure member to cause at least a cup member of the first end fitting to move in a first direction toward the first node;
inserting a tube between the first and second end fittings;
receiving a first end of the tube in an insert space of the second end fitting;
decreasing the distance between the first end fitting and the second end fitting by actuating the flexure member to cause at least the cup member of the first end fitting to move in an opposing second direction away from the first node; and
receiving a second end of the tube in an insert space of the first end fitting to provide a portion of the truss structure.

2. The method according to claim 1,
wherein the flexure member comprises a threaded rod or telescoping elements; and/or
the method further comprising allowing an amount by which the flexure member extends into the cup member of the first end fitting to vary during said actuating; and/or
the method further comprising providing a bondline gap between the tube and a sidewall of the insert space of the second end fitting that is sized to allow for angular misalignment of the tube and the second end fitting.

3. The method according to claim 1, further comprising providing a first seal being an inner surface of the tube and the second end fitting using a first porous sealing member of the second end fitting.

4. The method according to claim 3,
further comprising applying, by the first porous sealing member, an outward radial force on the tube to facilitate retention of the first end of the tube in the insert space of the second end fitting; and/or
the method further comprising using the first porous sealing member to allow movement of the tube relative to the second end fitting while maintaining the first seal; and/or
the method further comprising using the first porous sealing member to allow air to vent out of the insert space of the second end fitting while simultaneously preventing a bonding agent from flowing out of the insert space of the second end fitting, during an injection bonding process; and/or
the method further comprising using the first porous sealing member to create a dissipative ground path between the tube and the second end fitting

5. The method according to claim 3, further comprising adding a second porous sealing member to the portion of the truss structure to create a second seal between an outer surface of the tube and an exposed surface of the second end fitting.

6. The method according to claim 5,
further comprising applying, by the second porous sealing member, an inward radial force on the tube; and/or
the method further comprising using the first and second porous sealing members to allow air to vent out of the insert space of the second end fitting while simultaneously preventing a bonding agent from flowing out of the insert space of the second end fitting, during an injection bonding process.

7. The method according to claim 1, further comprising tuning a coefficient of thermal expansion of the truss structure to have a near-zero value by using different materials for at least two of the first end fitting, the first node, and the tube and or by using different materials for the flexure member and a cup member of the first end fitting.

8. A truss structure, comprising:
first and second nodes;
a tube extending between the first and second nodes;
a first end fitting coupling the first node to a first end of the tube; and
a second end fitting coupling the second node to an opposing second end of the tube;
wherein the first end fitting comprises a cup member and a flexure member configured to be actuated to cause the cup member to move relative to the first node for changing a distance between a first end fitting and the second end fitting.

9. The truss structure according to claim 8, wherein the distance is increased when the cup member is caused to move in a direction towards the first node, and decreased when the cup member is caused to move in a direction away from the first node.

10. The truss structure according to claim 8, wherein the first end fitting comprises an insert space sized and shaped to receive the first end of the tube, and second end fitting comprises an insert space sized and shaped to receive the second end of the tube; and/or
wherein the flexure member comprises a threaded rod or telescoping elements; and/or
wherein the first end fitting is configured to allow an amount by which the flexure member extends into the cup member to vary during an actuation of the flexure member; and/or
wherein a bondline gap is provided between the tube and a sidewall of an insert space of the first or second end fitting that is sized to allow for angular misalignment of the tube and the first or second end fitting.

11. The truss structure according to claim 8, further comprising a first porous sealing member configured to provide a first seal being an inner surface of the tube and the first or second end fitting.

12. The truss structure according to claim 11, wherein the first porous sealing member is configured to apply an outward radial force on the tube to facilitate retention of the first or second end of the tube in the insert space of the first or second end fitting; and/or
wherein the first porous sealing member is further configured to allow movement of the tube relative to the second or second end fitting while maintaining the first seal; and/or
wherein the first porous sealing member is further configured to allow air to vent out of the insert space of the first or second end fitting while simultaneously preventing a bonding agent from flowing out of the insert space of the first or second end fitting, during an injection bonding process; and/or
wherein the first porous sealing member is further configured to create a dissipative ground path between the tube and the second end fitting.

13. The truss structure according to claim 11, further comprising a second porous sealing member configured to create a second seal between an outer surface of the tube and an exposed surface of the first or second end fitting.

14. The truss structure according to claim 13, wherein the second porous sealing member is configured to allow air to vent out of the insert space of the first or second end fitting while simultaneously preventing a bonding agent from flowing out of the insert space of the first or second end fitting, during an injection bonding process.

15. The truss structure according to claim 8, wherein a coefficient of thermal expansion of the truss structure is tuned to have a near-zero value by using different materials for at least two of the first end fitting, the first node, and the tube and or by using different materials for the flexure member and a cup member of the first end fitting.
